# EUROPEAN PATENT APPLICATION

(11) **EP 2 613 232 A1**
(43) Date of publication of application: **10.07.2013**
(21) Application number: 11821575.5
(22) Date of filing: 19.08.2011
(51) Int. Cl.: G06F 3/041, G06F 3/044

(54) **INPUT DEVICE**

(30) Priority: 31.08.2010 JP 2010194673
(71) Applicant: Nippon Seiki Co., Ltd., Nagaoka-shi, Niigata 940-8580 (JP)
(72) Inventor: HATANO,Takayuki, Nagaoka, Niigata (JP); KATOH,Masaki, Nagaoka, Niigata (JP)
(74) Representative: Jackson, Richard Eric
(86) International application number: PCT/JP2011/068731
(87) International publication number: WO 2012/029558

(57) **Abstract**

Provided is an input device whereby a user may easily carry out a contact operation. An input device (100) comprises an obverse face cover (111), further comprising an operation screen, which receives an input operation of a user tracing a prescribed track upon the operation screen as though drawing or writing thereon. Projections (111b) which serve as input operation references are formed on the operation screen, and the input device (100) further comprises a sensor sheet (112) which is located at the reverse face side of the obverse face cover (111). The sensor sheet (112) detects the location on the operation screen that is traced by the input operation. The contact operation is easily carried out because the user can carry out the input operation with the projections (111b) serving as references.

## Description

### TECHNICAL FIELD

The present invention relates to an input device.

### BACKGROUND ART

For example, Patent Document 1 discloses providing an input device which includes a contact sensor for receiving a contact operation from a user in a steering of a car, and a technique to control car-mounted electronic devices, such as a car navigation device and an audio device, in accordance with the contact operation.

### PRIOR ART DOCUMENT

### PATENT DOCUMENT

Patent Document 1: Japanese Patent Application Laid-open No. 2009-298285

### SUMMARY OF THE INVENTION

### PROBLEMS TO BE SOLVED BY THE INVENTION

However, in the technique disclosed in Patent Document 1, since, for example, the user performs a contact operation without viewing a contact sensor while driving a car, the user does not recognize where he or she is touching and operating on the contact sensor and, therefore, the contact operation has been difficult to perform.

The present invention has been made in view of the aforementioned circumstances and an object thereof is to provide an input device with which a user can perform a contact operation easily.

### MEANS FOR SOLVING THE PROBLEM

In order to achieve the above-described object, the input device according to the present invention is an input device which receives an input operation, which includes: an operation screen which a member to be detected performing the input operation touches; and a sensor portion for detecting a position at which the member to be detected has touched the operation screen, wherein the operation screen includes a projecting portion.

### EFFECT OF THE INVENTION

With the input device according to the present invention, the user can perform a contact operation easily.

### BRIEF DESCRIPTION OF THE DRAWINGS

[Fig. 1] Fig. 1 is a configuration diagram of a system which includes an input device according to a first embodiment of the present invention.
[Fig. 2] Fig. 2 is an overview diagram in the vicinity of a driver's seat inside a car in which the input device is provided.
[Fig. 3] Fig. 3(a) is an exploded perspective view illustrating a structure of the input device and Fig. 3(b) is a perspective view after each portion illustrated in Fig. 3(a) is assembled.
[Fig. 4] Fig. 4(a) is a plan view of a contact sensor and Fig. 4(b) is a cross sectional view of a surface cover, a sensor sheet and a spacer in the contact sensor along line A-A of Fig. 4(a).
[Fig. 5] Fig. 5 is a diagram illustrating first sensor arrays and second sensor arrays included in the sensor sheet.
[Fig. 6] Fig. 6 is a flowchart of a car-mounted electronic device control operation executed by a control device according to the first embodiment.
[Fig. 7] Fig. 7(a) and Fig. 7(b) are diagrams for illustrating exemplary gesture characteristic quantity.
[Fig. 8] Fig. 8(a) and Fig. 8(b) are diagrams for illustrating exemplary gesture characteristic quantity related to a gesture operation along projecting portions.
[Fig. 9] Fig. 9 is a diagram illustrating an exemplary gesture operation on the basis of the projecting portions and an exemplary operation of the car-mounted electronic device performed in accordance with the gesture operation.
[Fig. 10] Fig. 10 is a diagram illustrating an exemplary gesture operation on the basis of the projecting portions and an exemplary operation of the car-mounted electronic device performed in accordance with the gesture operation.
[Fig. 11] Fig. 11 is a diagram illustrating an exemplary gesture operation on the basis of the projecting portions and an exemplary operation of the car-mounted electronic device performed in accordance with the gesture operation.
[Fig. 12] Fig. 12 is a diagram illustrating an exemplary gesture operation on the basis of the projecting portions and an exemplary operation of the car-mounted electronic device performed in accordance with the gesture operation.
[Fig. 13] Fig. 13 is a diagram illustrating an exemplary gesture operation on the basis of the projecting portions and an exemplary operation of the car-mounted electronic device performed in accordance with the gesture operation.
[Fig. 14] Fig. 14 is a configuration diagram of a storage unit according to a second embodiment of the present invention.
[Fig. 15] Fig. 15 is a diagram illustrating a first track and second tracks in a predetermined gesture operation.
[Fig. 16] Fig. 16 is a flowchart of a misoperation preventing process performed by a control device according to the second embodiment.
[Fig. 17] Fig. 17 is a diagram illustrating a case in which, in a predetermined gesture operation, an operation is performed from a forward direction to a reverse direction.
[Fig. 18] Fig. 18 is a configuration diagram of a system which includes an input device according to a third embodiment of the present invention.
[Fig. 19] Fig. 19(a) and Fig. 19(b) are plan views illustrating exemplary shapes of an operation screen included in a contact sensor according to a modification of the present invention.

### BEST MODES FOR CARRYING OUT THE INVENTION

An input device according to an embodiment of the present invention will be described with reference to the drawings.

### 1. First Embodiment

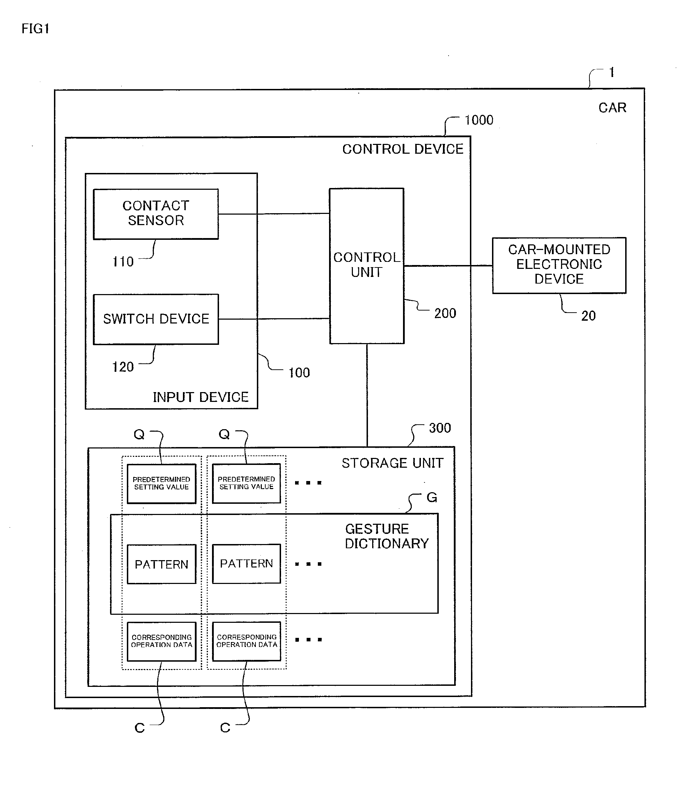

An input device according to the first embodiment is an input device 100 which is illustrated in Fig. 1 and is provided in a car 1. When a user (usually, a driver) of the car 1 operates the input device 100, a control device 1000 causes a car-mounted electronic device 20 to perform various operations in accordance with the operation.

### (Structure of Car 1)

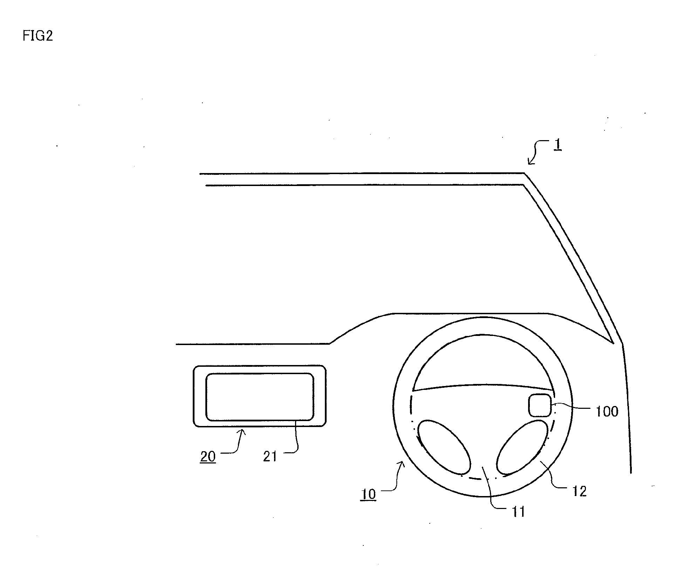

As illustrated in Fig. 2, the car 1 includes a steering 10 and the car-mounted electronic device 20.

The steering 10 is a part of a steering device of the car 1 and includes a main body portion 11 and a steering wheel 12.

The main body portion 11 is a spoke portion connected to an unillustrated steering shaft of the car 1 and includes the input device 100 on the right side thereof. A mounting hole (not illustrated) having a shape corresponding to that of the input device 100 is formed in the main body portion 11. The input device 100 is attached to the mounting hole and, thereby, only a later-described operation screen of the input device 100 is exposed.

The steering wheel 12 is a ring-shaped member which is attached to the main body portion 11 and is grasped by the driver when the driver steers the car 1.

The car-mounted electronic device 20 is, for example, an audio device and a car navigation device. The car-mounted electronic device 20 is electrically connected to a later-described control unit 200 and operates in accordance with a control signal received from the control unit 200. The car-mounted electronic device 20 displays, on a display unit 21 thereof, an image corresponding to an operation.

### (Structure of Control Device 1000)

The control device 1000 includes the input device 100, the control unit 200 and a storage unit 300.

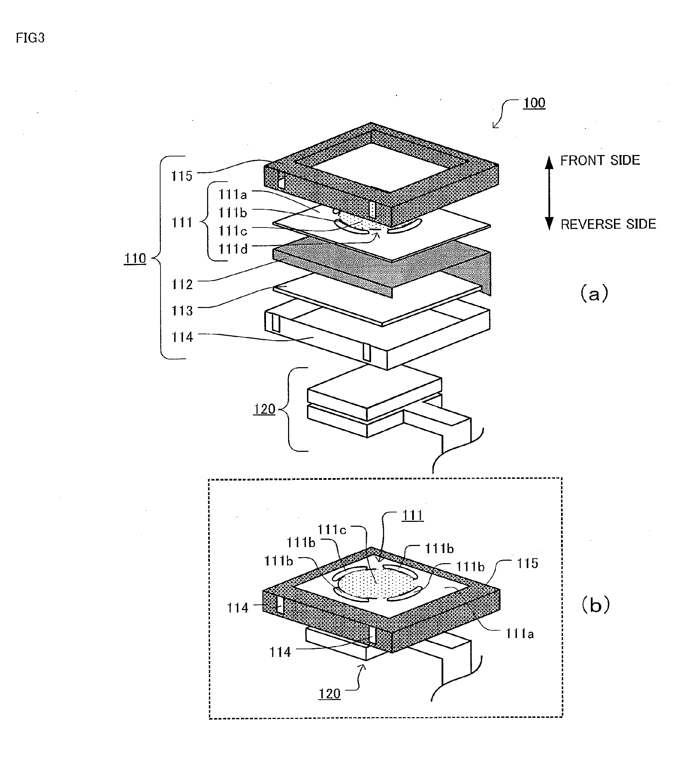

As illustrated in Figs. 3(a) and 3(b), the input device 100 includes a contact sensor 110 and a switch device 120.

The contact sensor 110 is a touchpad device for detecting a position of, for example, a thumb, which touched the operation screen under the control of the later-described control unit 200 when the user performs an operation of tracing on the operation screen with, for example, the thumb to make a predetermined track (hereafter, referred to as a "gesture operation"). The contact sensor 110 includes a surface cover 111, a sensor sheet 112, a spacer 113, a lower case 114 and an upper case 115.

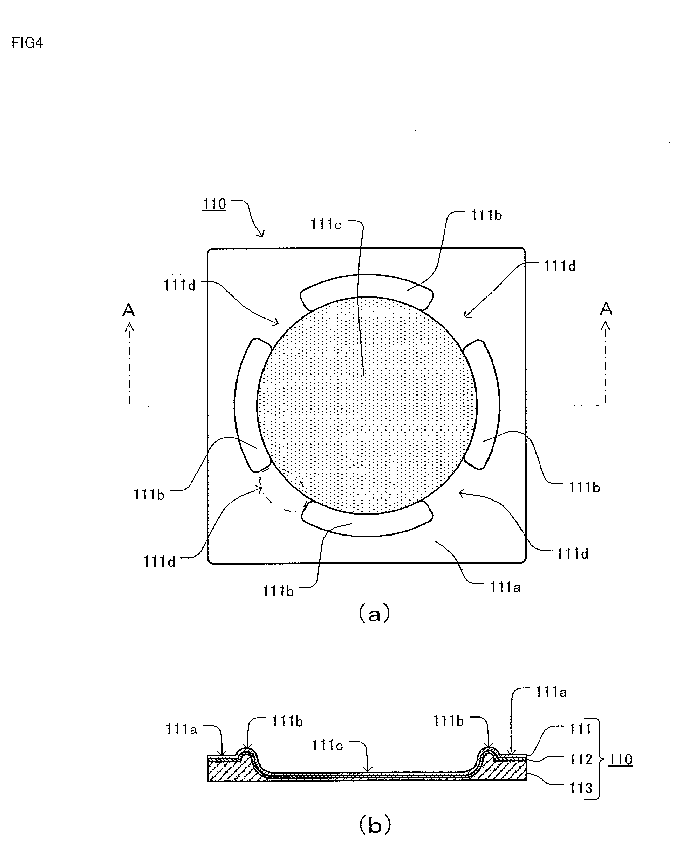

The surface cover 111 includes a sheet-shaped operation screen which is made of an insulating material, such as acrylic resin and which is touched by, for example, a finger of the user when the gesture operation is performed. As illustrated in Fig. 4(b), the operation screen of the surface cover 111 includes projections and a recess and, therefore, stepped portions are formed on this operation screen. Such an operation screen is constituted by a flat portion 111a, projecting portions 111b, a recessed portion 111c and gap portions 111d.

The flat portion 111a is a flat portion of the surface cover 111.

The projecting portions 111b are portions which project so as to be raised in the direction of a front side from the flat portion 111a as illustrated in Fig. 4(b). When seen from the front side, as illustrated in Fig. 4(a), it can be considered that a plurality of arc-shaped projecting portions 111b are arranged at predetermined intervals so as to substantially surround a circle. Note that, as illustrated by the double-sided arrow in Fig. 3(a), the term "front side" is related to the user side with respect to the input device 100 and the term "reverse side" is related to the opposite side.

As illustrated in Fig. 4(b), the recessed portion 111c is situated at substantially the center of the operation screen and is a portion which is recessed so as to be depressed in the direction of the reverse side from the flat portion 111a. As illustrated in Fig. 4(a), the recessed portion 111c is formed inside the projecting portions 111b which are arranged in a circular form.

As illustrated in Fig. 4(a) (one of the four gap portions 111d is illustrated by a dash-dot-dot line), the gap portions 111d are portions each located between each arc-shaped projecting portions 111b. Although the gap portions 111d are a part of the flat portion 111a, the gap portions 111d are identified by names which are different from that of the flat portion 111a for convenience of the description of a "gesture operation on the basis of the projecting portions" which will be provided later.

As illustrated in Fig. 4(b), the cross sectional shapes of the flat portion 111a, the projecting portions 111b and the recessed portion 111c are connected smoothly to one another so as not to prevent the gesture operation of the user.

The sensor sheet 112 is a sensor sheet which employs a projected capacitive system including a plurality of sensors 1120 (i.e., sensing electrodes) for detecting a position of a member to be detected, such as a finger, and is situated on a back surface side of the surface cover 111.

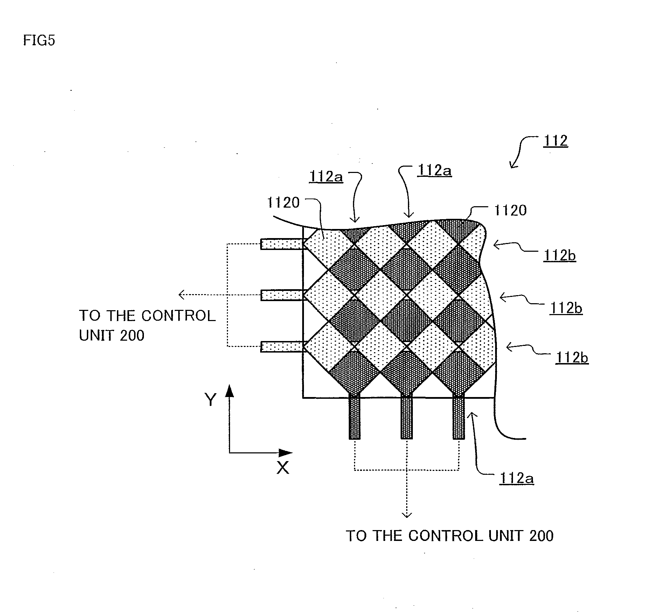

As illustrated in Fig. 5, the sensor sheet 112 is substantially constituted by a layer which includes first sensor arrays 112a for detecting a position of the member to be detected in an X direction and a layer which includes second sensor arrays 112b for detecting a position of the member to be detected in a Y direction which layers are laminated on each other. Since the first sensor arrays 112a and the second sensor arrays 112b are combined, the sensors 1120 are arranged in a matrix form in the sensor sheet 112. The first sensor arrays 112a and the second sensor arrays 112b are electrically connected to the later-described control unit 200 respectively.

If the member to be detected, such as a finger, touches the surface cover 111, electrostatic capacity between the sensor 1120 situated on the back surface side thereof and the member to be detected changes. Since the control unit 200 and each sensor 1120 are electrically connected to each other, the control unit 200 can detect the change in the electrostatic capacity in each sensor. The control unit 200 calculates input coordinate values (X, Y) which represent a contact position of the member to be detected on the basis of the change in this electrostatic capacity. The input coordinate values are coordinate values in an XY coordinate system in each sensor 1120 previously set on the operation screen. The input coordinate values are represented by an X coordinate allocated to a centroid position of distribution of the change in the electrostatic capacity in the X direction (for example, a position of a sensor 1120 at which electrostatic capacity is higher than a constant threshold and is the largest) and a Y coordinate allocated to a centroid position of distribution of the change in the electrostatic capacity in the Y direction (for example, a position of a sensor 1120 at which electrostatic capacity is higher than a constant threshold and is the largest). The control unit 200 calculates the input coordinate values (X, Y) by calculating these X coordinate and Y coordinate.

Returning to Fig. 4, the sensor sheet 112 is formed integrally with the surface cover 111 by a reduction process so as to be processed to the same shape as that of the surface cover 111 (see Fig. 4(b)). Since the sensor sheet 112 is thus integrally formed, the surface cover 111 and the sensor sheet 112 are formed as a single sheet and the shapes of the stepped portions, such as the projecting portions 111b and the recessed portion 111c, included in the operation screen are constituted by bent portions of the single sheet. Further, since the sensor sheet 112 is thus integrally formed, a back surface of the surface cover 111 and a front surface of the sensor sheet 112 are in contact with each other. Therefore, the sensors 1120 are arranged in accordance with the shapes of the stepped portions of the surface cover 111. Since the sensors 1120 are thus arranged, even if the gesture operation is performed on the operation screen which has the shapes of the stepped portions, such as the projecting portions 111b, the control unit 200 can detect the change in the electrostatic capacity in each sensor.

The spacer 113 is situated on the back surface side of the sensor sheet 112 and, as illustrated in Fig. 4(b), is formed in accordance with the shapes of the surface cover 111 and the sensor sheet 112 which are formed integrally with each other. The spacer 113 is a member which keeps the shapes of the surface cover 111 and the sensor sheet 112 when pressure is applied from the front side of the surface cover 111 by a user operation.

Returning to Fig. 3, the lower case 114 is a box-shaped member which is made of, for example, synthetic resin and stores each of the portions 111 to 113 on a front side thereof.

The upper case 115 is a cover portion for covering, from the front side, the lower case 114 which stores each of the portions 111 to 113. The upper case 115 includes an opening through which the operation screen of the surface cover 111 is exposed. The upper case 115 is made of, for example, synthetic resin.

The switch device 120 is situated on the back surface side of the contact sensor 110 and is electrically connected to the control unit 200. When the user performs an operation to press the operation screen of the input device 100 (hereafter, referred to as an "input confirmation operation), the switch device 120 is pressed and a predetermined input signal is transmitted to the control unit 200. The input confirmation operation is performed, as will be described later, when a command selected by a predetermined gesture operation is confirmed.

Here, the input device 100 is attached to the main body portion 11 of the steering 10 by, for example, welding the upper case 115 of the contact sensor 110 to the main body portion 11 with elastic resin. Since the input device 100 is attached in this manner, the following mechanism is established in which, when the user presses the operation screen, the contact sensor 110 is depressed and the switch device 120 is pressed.

The input device 100 is constituted by each of the above-described portions. An overview after the input device 100 is assembled is illustrated in Fig. 3(b).

Returning to Fig. 1, the control unit 200 is constituted by, for example, a central processing unit (CPU). The control unit 200 executes an operation program stored in the storage unit 300 and performs various processes and control. At least a part of the control unit 200 may be constituted by various dedicated circuits, such as Application Specific Integrated Circuit (ASIC).

The storage unit 300 is constituted by, for example, read only memory (ROM), random access memory (RAM) and flash memory. The storage unit 300 functions as, for example, a work area of the CPU which constitutes the control unit 200, a program area which stores the operation program executed by the CPU and a data area.

In the program area, operation programs, such as (i) a program for performing a later-described car-mounted electronic device control operation and (ii) a program for transmitting a predetermined control signal to the car-mounted electronic device 20 in accordance with the input confirmation operation received by the switch device 120, are stored.

As illustrated, in the data area, a gesture dictionary G, corresponding operation data C, a preset value Q which is a predetermined value of later-described gesture characteristic quantity and so forth are stored previously.

The gesture dictionary G is data required to recognize a currently performed gesture operation. The gesture dictionary G includes a plurality of patterns representing characteristics of tracks made by the gesture operation. The patterns representing characteristics of the gesture operation are constituted by combinations of each component of the later-described gesture characteristic quantity. In the present embodiment, these patterns are patterns which represent characteristics of a later-described "gesture operation on the basis of the projecting portions."

The corresponding operation data C is data of a control signal which causes the car-mounted electronic device 20 to perform a predetermined operation. There are a plurality of pieces of corresponding operation data C and each of pieces of corresponding operation data C is correlated with a plurality of patterns included in the gesture dictionary G. For example, data of a command to transmit a volume control signal for causing the car-mounted electronic device 20 to perform change in audio volume is correlated with a pattern which represents the characteristic of an arcuate gesture operation along the projecting portions 111b as the corresponding operation data C and is stored previously in the data area.

The preset value Q is the data of a predetermined value of gesture characteristic quantity and is the data used as a trigger for the transmission of a control signal to the car-mounted electronic device 20. The preset value Q is correlated for each of a plurality of patterns included in the gesture dictionary G. That is, a plurality of preset values Q exist. Here, the gesture characteristic quantity selected as a target for comparison of the preset value Q is, for example, the length S of a track in a track in which a plurality of input coordinate values are connected in time series by straight lines.

Although an operation of the control device 1000 will be described in detail later, roles of the gesture dictionary G, the corresponding operation data C and the preset value Q will be described briefly here.
i) The gesture dictionary G is used to recognize to which pattern the currently performed gesture operation belongs (that is, of which kind the gesture operation is).
ii) The corresponding operation data C is used to determine which kind of control signal is to be transmitted to the car-mounted electronic device 20 in accordance with the gesture operation recognized on the basis of the gesture dictionary G.
iii) The preset value Q is used to determine which value of the gesture characteristic quantity related to the recognized gesture operation is once reached, the control signal in accordance with the corresponding operation data C is to be transmitted.

Each data stored in the storage unit 300 is suitably stored by the operation of the user himself or herself as a default value using a known method of registering data.

### (Operation)

The thus-configured control device 1000 controls various operations of the car-mounted electronic device 20 in accordance with the "gesture operation on the basis of the projecting portions" specific to the present embodiment performed on the operation screen of the contact sensor 110. The car-mounted electronic device control operation which implements such control will be described.

### [Car-mounted Electronic Device Control Operation]

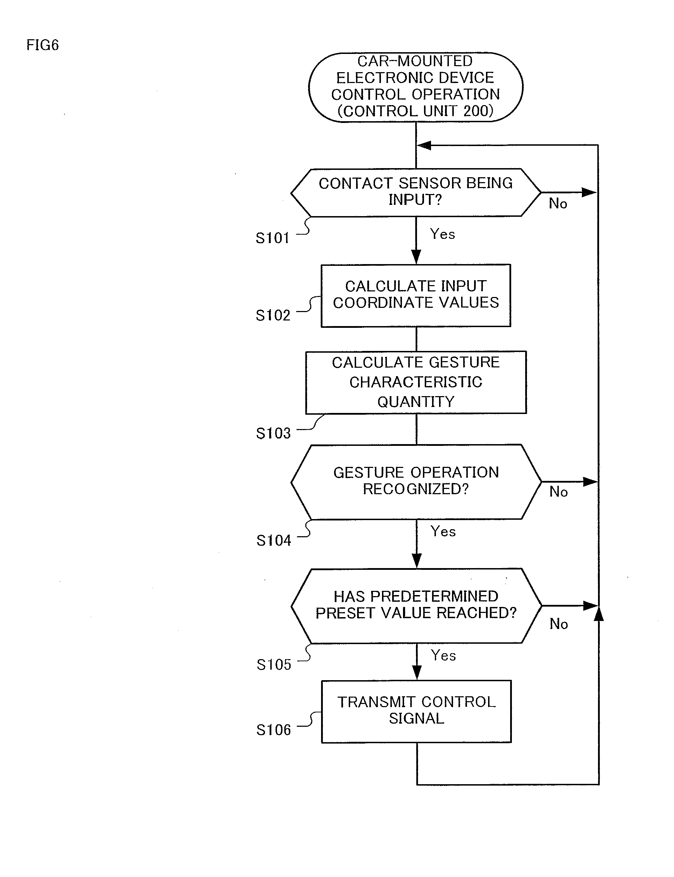

A process related to a flowchart of Fig. 6 is performed by the control unit 200. This process is started based on the condition that, for example, the car-mounted electronic device 20 is started.

When the process is started, the control unit 200 determines whether an operation input is being performed in the contact sensor 110 (step S101). Whether an operation input is being performed is determined by the control unit 200 whether there is a sensor 1120 of which electrostatic capacity is higher than a certain threshold in the X direction and in the Y direction. If such a sensor 1120 exists in the X direction and in the Y direction, there is a high possibility that a member to be detected is touching the operation screen. Thus, a possibility that an operation input is being performed is high. Therefore, in this case, the control unit 200 determines that an operation input is being received (step S101; Yes) and performs a process of step S102. Otherwise, the control unit 200 determines that no operation input is being received (step S101; No) and then performs a process of step S101. In this manner, the control unit 200 stands by until an operation input is performed. Note that, although the control unit 200 counts time using, for example, an unillustrated timer, if time is already being counted and it is determined to be No in step S101, time counting is ended. In a case in which it is determined to be Yes in step S101, the control unit 200 continues counting time if time is already being counted. If time is not being counted, the control unit 200 starts counting time. In this manner, the control unit 200 continuously counts time from the first contact until the contact is released.

In step S102, the control unit 200 calculates the input coordinate values (X, Y) (refer to the description above) and the process proceeds to step S103. The control unit 200 records the calculated input coordinate values in the storage unit 300 in time series. The input coordinate values shall be recorded until time counting is ended in time series or until a predetermined time period elapses after recording of the input coordinate values is started. Thus, a plurality of input coordinate values calculated between the present time and the timing before predetermined time from the present time are recorded.

In step S103, the control unit 200 calculates various kinds of gesture characteristic quantity and the process proceeds to step S104.

Here, the gesture characteristic quantity is an amount which represents characteristics of a track made by the currently performed gesture operation. The gesture characteristic quantity is the amount calculated in accordance with the counted time, the input coordinate values (X0, Y0) which are calculated for the first time after the time counting was started, and the input coordinate values (X, Y) which is currently calculated. The input coordinate values (X0, Y0) calculated for the first time after the time counting was started represent the initial position at which the operation input was started.

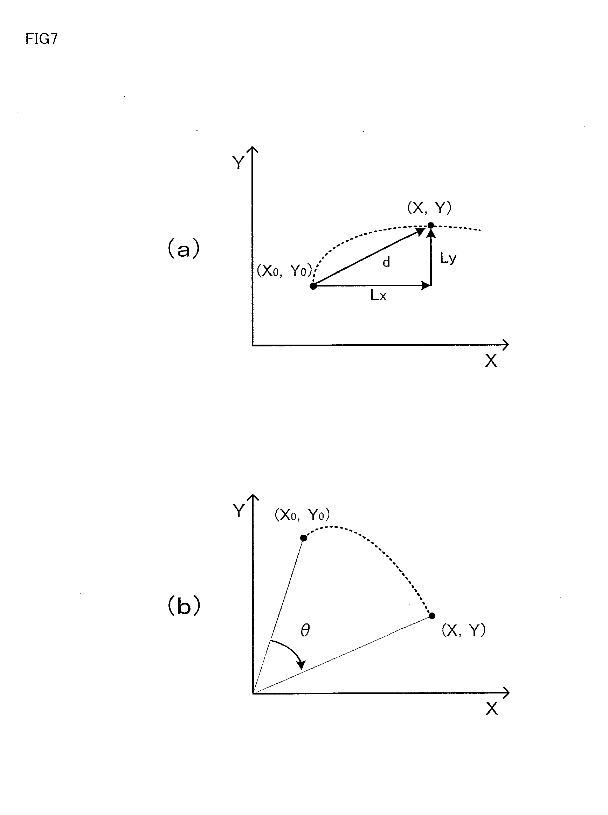

The gesture characteristic quantity includes the currently calculated input coordinate values (X, Y), distance between coordinates in the X direction (Lx) and distance between coordinates in the Y direction (Ly) from the input coordinate values (X0, Y0) to the input coordinate values (X, Y), direction (d) and moved time (t) (see Fig. 7(a)). Lx corresponds to X-X0, Ly corresponds to Y-Y0, d is an amount calculated from Lx and Ly, and t is time interval from the start of time counting. With the combinations of the gesture characteristic quantity, the control unit 200 can acquire information representing tracks left by the user when the user traces the operation screen of the input device.

Since it is only necessary that the gesture characteristic quantity is an amount in which the characteristics of the tracks traced in the gesture operation are extracted, the above-described patterns are not restrictive. What quantity is to be selected as the gesture characteristic quantity and how the selected quantity is to be combined are suitably determined in consideration of the characteristics of the gesture operation to be recognized. If it is desired to recognize the gesture operation in a rotational direction, the rotational direction (θ) may be calculated as the gesture characteristic quantity (see Fig. 7(b)), and the distance between coordinates (L= {(Lx)2+(Ly)2} 1/2) and the speed (V=L/t) may be calculated.

If two input coordinate values are not stored in step S102, since the gesture characteristic quantity is not calculated, the process returns to step S101 although not illustrated. In step S103, the calculated gesture characteristic quantity is stored until the time counting is ended.

In step S104, the control unit 200 performs a process to recognize, in a predetermined collation method, whether the currently performed gesture operation corresponds to any of the patterns of the plurality of gesture operations included in the gesture dictionary G in accordance with the gesture characteristic quantity calculated in step S103 and stored gesture characteristic quantity. This predetermined collation is performed by comparing the combination of the calculated gesture characteristic quantity and the patterns of the gesture operations included in the gesture dictionary G by, for example, the Nearest Neighbor algorithm (NN) method and the k-Nearest Neighbor algorithm (k-NN) method). That is, in this step S104, it is determined to which kind of operations the currently performed gesture operation corresponds.

If the currently performed gesture operation is recognized (step S104; Yes), the process proceeds to step S105. On the other hand, if the currently performed gesture operation is not recognized (step S104; No), the process returns to step S101.

In step S105, the control unit 200 determines whether the calculated gesture characteristic quantity has reached the preset value Q which is correlated with the pattern related to the gesture operation recognized in step S104. Here, the gesture characteristic quantity to be compared with the preset value Q is suitably defined in accordance with the characteristics of the gesture operations to be recognized for each of a plurality of patterns included in the gesture dictionary G. For example, if the recognized gesture operation is an operation of tracing the operation screen in an arcuate shape along the projecting portions 111b, the gesture characteristic quantity to be compared with the preset value Q correlated with the pattern of the gesture operation is the length S of the track in a track in which a plurality of input coordinate values are connected in time series by straight lines. If the gesture characteristic quantity has reached the predetermined preset value (step S105; Yes), the process proceeds to step S106. On the other hand, if the gesture characteristic quantity has not reached the predetermined preset value Q (step S105; No), the process returns to step S101.

In step S106, the control unit 200 reads the corresponding operation data C from the storage unit 300 and transmits a control signal corresponding to the recognized gesture operation to the car-mounted electronic device 20. The process then returns to step S101.

A flow of steps S104 to 106 will be described briefly.
i) The control unit 200 determines whether the currently performed gesture operation corresponds to any of a plurality of patterns included in the gesture dictionary G (that is, recognizes the currently performed gesture operation).
ii) It is determined whether the calculated gesture characteristic quantity has reached the preset value Q which is correlated with the pattern related to the recognized gesture operation.
iii) If the gesture characteristic quantity has reached the preset value Q, a control signal corresponding to the pattern related to the recognized gesture operation is transmitted. Such a process flow is performed.

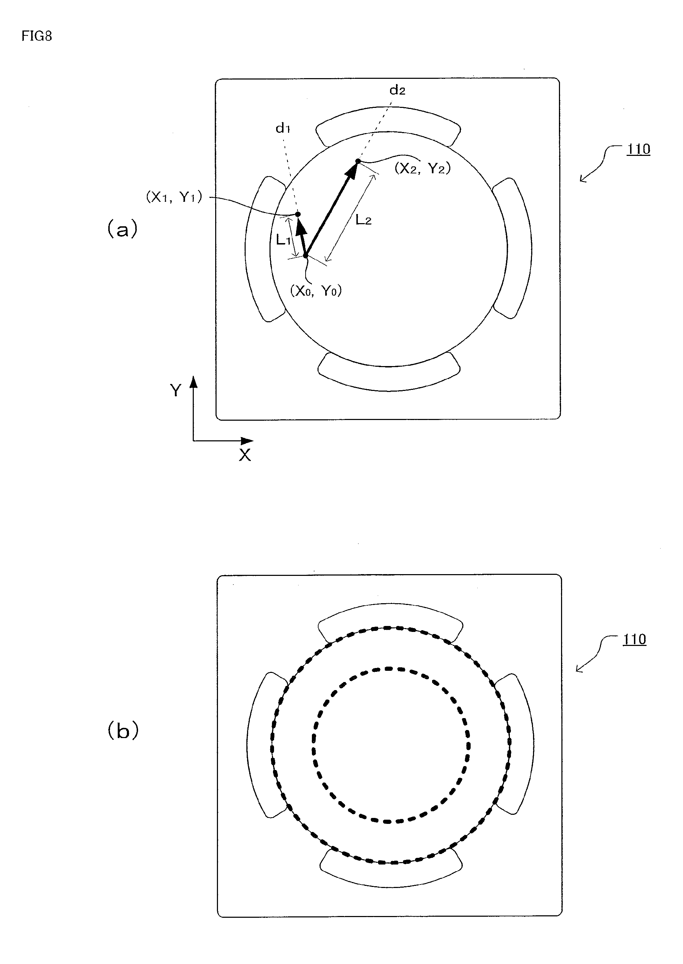

The foregoing is a procedure of the car-mounted electronic device control operation. Next, an example of how this process recognizes the actual gesture operation will be described briefly supposing a case in which a gesture operation along the projecting portions 111b is being performed. The reference numerals in the following description depend on those illustrated in Fig. 8(a).

The control unit 200 calculates first gesture characteristic quantity (e.g., distance L1 between coordinates and direction d1) on the basis of the input coordinate values (X0, Y0) which are calculated for the first time after the time counting was started and first input coordinate values (X1, Y1) calculated subsequently (step S103).

For example, if no gesture operation has been recognized from the first gesture characteristic quantity (step S104; No), the control unit 200 calculates second gesture characteristic quantity (e.g., distance L2 between coordinates and direction d2) on the basis of the input coordinate values (X0, Y0) and the input coordinate values (X2, Y2) which are calculated subsequently to the first input coordinate values (X1, Y1) (step S103).

The control unit 200 then performs a process to recognize a gesture operation in the method described above on the basis of the combination of the first gesture characteristic quantity and the second gesture characteristic quantity (step S104).

If, for example, a pattern which represents the characteristics of the gesture operation along the projecting portions tracing a region between two circles shown by the dotted lines in Fig. 8(b) is included in the gesture dictionary G, information is acquired that, at the time at which the second input coordinate value is calculated, compared with the time at which the first input coordinate value is calculated, the distance L between coordinates becomes large and the gesture operation is directed in the X direction on the basis of the transition of the direction d (it is highly possible that a clockwise gesture operation along the projecting portions has been performed) on the basis of the data of the combination of L1 and d1 which are the first gesture characteristic quantity, and L2, and d2 which are the second gesture characteristic quantity. The gesture operation can be recognized on the basis of such information.

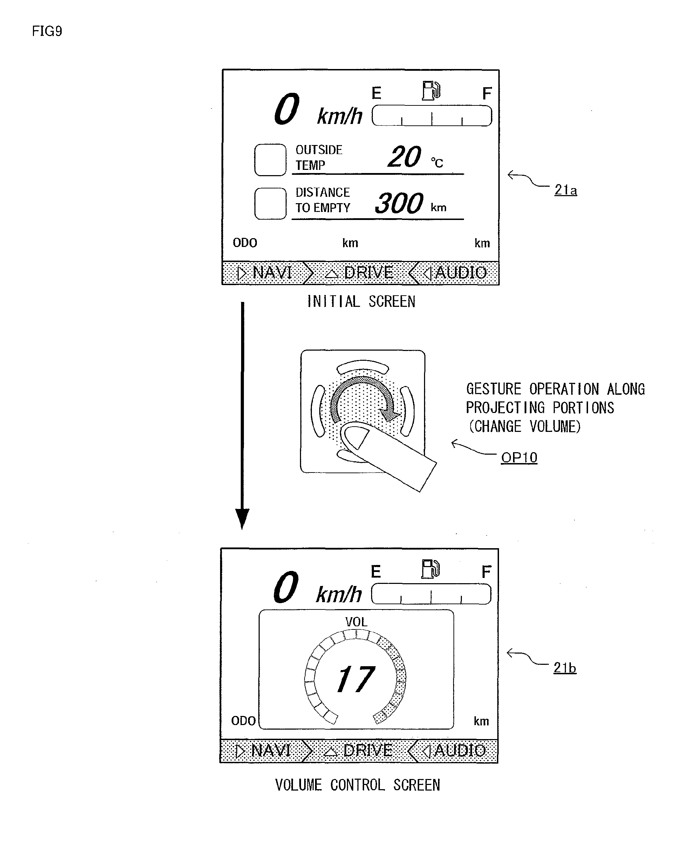

Even if the gesture operation is not the gesture operation along the projecting portions 111b, in the same manner as described above, by forming a plurality of patterns representing the characteristics of the gesture operations which are desired to be recognized on the basis of the coordinate values representing the positions at which the projecting portions 111b are formed and ranges in the vicinity of the projecting portions 111b and by making the patterns be included as data in the gesture dictionary G, various gesture operations may be recognized and control signals corresponding to the recognized gesture operations may be transmitted to the car-mounted electronic device 20. Hereinafter, with reference to Figs. 9 to 13, the "gesture operation on the basis of the projecting portions" specific to the present embodiment and an exemplary operation performed by the car-mounted electronic device 20 in accordance with the "gesture operation on the basis of the projecting portions" will be described.

### (Exemplary Gesture Operation on the Basis of Projecting Portions)

### <Gesture Operation OP 10 along Projecting Portions>

With the turning-on of the ignition, operating power is supplied, and then the car-mounted electronic device 20 displays an initial screen 21a illustrated in Fig. 9 on the display unit 21. In the state of the initial screen 21a, when the user performs a gesture operation OP 10 of tracing the recessed portion 111c of the operation screen clockwise along the projecting portions 111b, the control unit 200 recognizes the OP 10 and transmits a volume control signal correlated with the recognized OP 10. The car-mounted electronic device 20 which received the volume control signal switches the initial screen 21a into a volume control screen 21b and changes the audio volume in accordance with the OP 10. Thus, the user can change the audio volume of the car-mounted electronic device 20 by performing the OP 10.

### <Gesture Operation OP 20 Crossing over Projecting Portions from Outside to Inside>

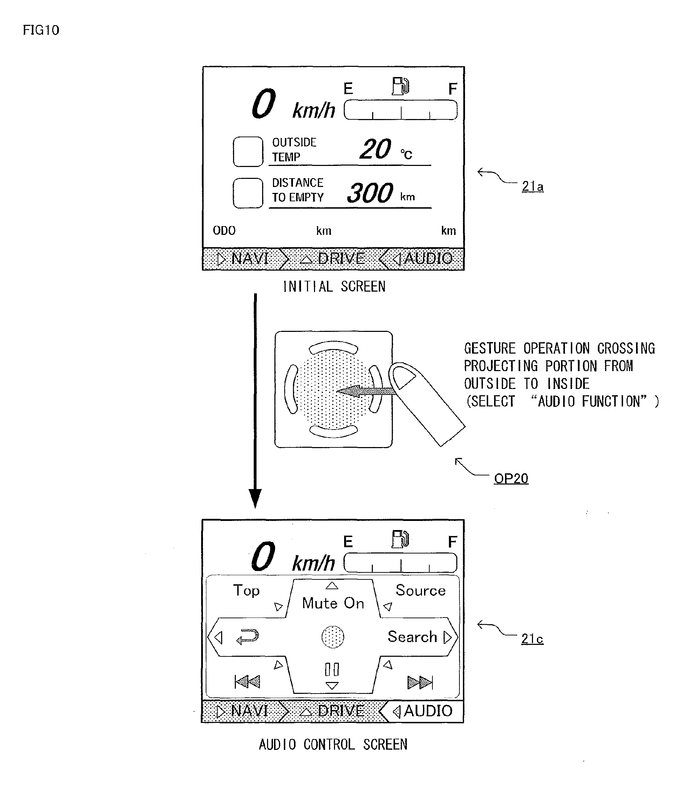

As illustrated in Fig. 10, in the state of the initial screen 21a, when the user performs a gesture operation OP 20 of tracing the operation screen of the input device 100 sequentially at the flat portion 111a, the projecting portion 111b and the recessed portion 111c in this order from outside (in this embodiment, an operation in a direction from the right to the inside corresponding to "AUDIO" of the initial screen 21a), the Initial screen 21a is switched into an audio control screen 21c.

### <Gesture Operation OP 30 Passing Through Gap Portion>

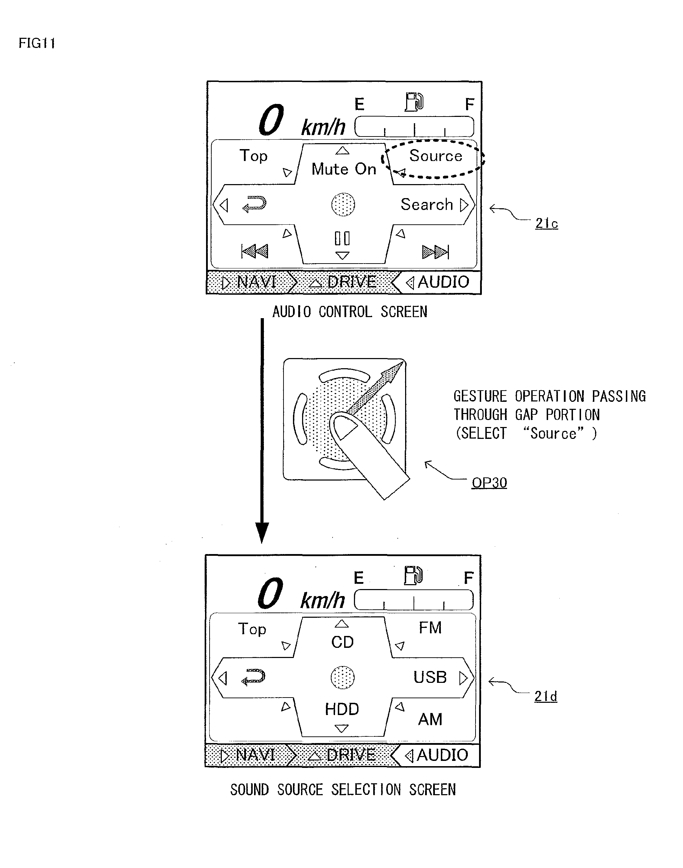

As illustrated in Fig. 11, in the state of the audio control screen 21c, when the user performs a gesture operation OP 30 of tracing the operation screen of the input device 100 from the recessed portion 111c to the flat portion 111a through the gap portion 111d (in this embodiment, the upper right gap portion 111d corresponding to "Source" of the audio control screen 21c), the audio control screen 21c is switched into a sound source selection screen 21d. Note that, it is also possible that only a predetermined cursor is moved by the gesture operation OP 30 and switching into the sound source selection screen 21d is performed by an input confirmation operation received by the switch device 120.

### <Gesture Operation OP 40 Crossing over Projecting Portions from Inside to Outside>

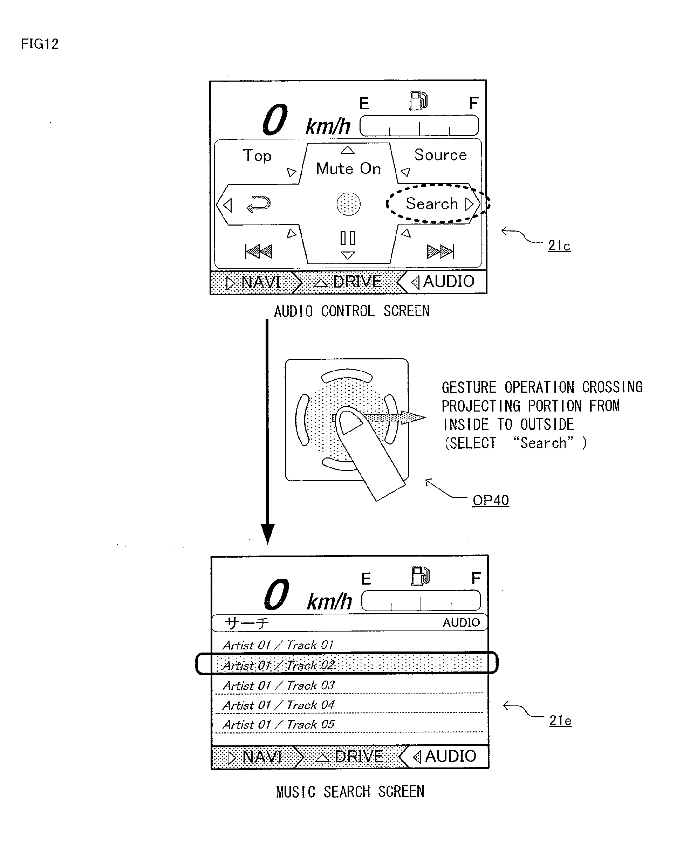

As illustrated in Fig. 12, in the state of the audio control screen 21c, when the user performs a gesture operation OP 40 of tracing the operation screen of the input device 100 sequentially at the recessed portion 111c, the projecting portion 111b and the flat portion 111a in this order from the inside (in this embodiment, an operation of crossing a right projecting portion 111b which corresponds to "Search" on the audio control screen 21c), the audio control screen 21c is switched into a music search screen 21e. Note that, it is also possible that only a predetermined cursor is moved by the gesture operation OP 40 and switching into the music search screen 21e is performed by an input confirmation operation received by the switch device 120.

### <Gesture OP 50 within Recessed Portion>

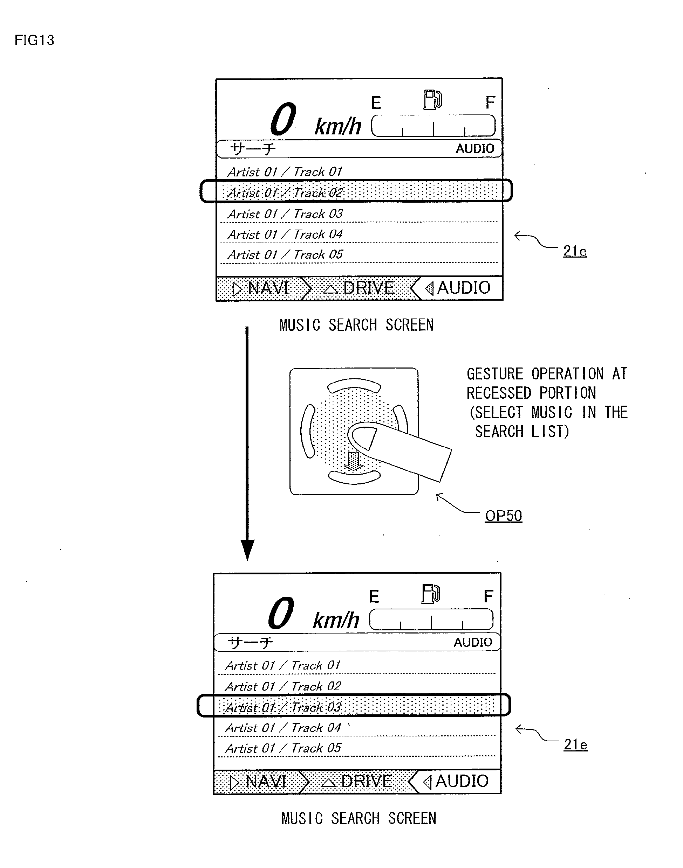

As illustrated in Fig. 13, in the state of the music search screen 21e, when the user performs a gesture operation OP 50 of slightly sliding from the recessed portion 111c toward the projecting portion 111b, a predetermined cursor moves in correspondence with the sliding direction and a desired music may be selected. The selected music is reproduced by an input confirmation operation received by the switch device 120.

The example described above is implemented when the car-mounted electronic device control operation is performed based on the condition that a plurality of patterns representing the characteristics of the tracks made by each of the gesture operations OP 10 to OP 50 are included in the gesture dictionary G and that the preset value Q and the corresponding operation data C are correlated with each of the plurality of patterns. The kind and value of the gesture characteristic quantity used as a target for comparison of the preset value Q correlated with each pattern are suitably defined in consideration of the characteristics of the gesture operation which is desired to be recognized. The kind of the corresponding operation data C correlated with each pattern is suitably defined in consideration of the characteristics of the gesture operation which is desired to be recognized.

In the input device 100 according to the present embodiment, the user can perform an intended operation accurately while sensing the shape of the stepped portions of, for example, the projecting portions 111b provided on the operation screen, with the fingertip. The control unit 200 recognizes the gesture operation performed based on the shape of the stepped portions of, for example, the projecting portions 111b by the car-mounted electronic device control operation, and controls the operation of the car-mounted electronic device 20 in accordance with the recognized gesture operation. That is, with the input device 100 according to the present embodiment, the user may perform the gesture contact easily. With the shape of the stepped portions of, for example, the projecting portions 111b on the operation screen, the user easily perform an accurate gesture operation even if he or she performs the operation without viewing the operation screen of the input device 100 while driving the car 1 (i.e., an eyes free operation).

Further, the projecting portions 111b are formed in arc shapes on the operation screen of the input device 100 according to the present embodiment. With this, even during the travelling of the car 1, a smooth operation input in accordance with an arcuate motion which is assumed when the user moves the thumb about the base of the thumb while gripping the steering wheel 12 is possible.

Since the projecting portions 111b are formed on the operation screen, even if the user performs the gesture operations OP 20 and OP 40 which crosses the above-described projecting portion 111b during the travelling of the car 1, the user may have the feeling of crossing the shape of the stepped portion at the fingertip and, therefore, the operation input is easy also in the eyes free operation.

Since each of the gap portions 111d is formed between adjacent projecting portions 111bs on the operation screen, even if the user performs the gesture operation OP 30 of passing through the gap portion 111d during the travelling of the car 1, the user may have the feeling of passing through the gap portion at the fingertip and, therefore, the operation input is easy also in the eyes free operation.

Since the recessed portion 111c is formed on the operation screen, the finger fits well when the user performs the gesture operation on the operation screen. In addition, since the recessed portion 111c and the projecting portions 111c are formed to be connected smoothly to one another, the finger may be moved smoothly when the user performs the gesture operation OP 10 along the projecting portions 111b, and the gesture operations OP 20 and OP 40 crossing the projecting portions 111b.

### 2. Second Embodiment

In the first embodiment, the control device 1000 performs the car-mounted electronic device control operation. If, in addition to this, an operation to prevent misoperation of the user, the user may concentrate on the driving of the car 1 and safety is provided.

Hereinafter, a control device 1000 which, while including the car-mounted electronic device control operation, performs a misoperation preventing process to enable an operation intended by the user will be described. Since fundamental structure and operation of a system including the control device 1000 are the same as those of the first embodiment, difference will be described mainly for ease of understanding.

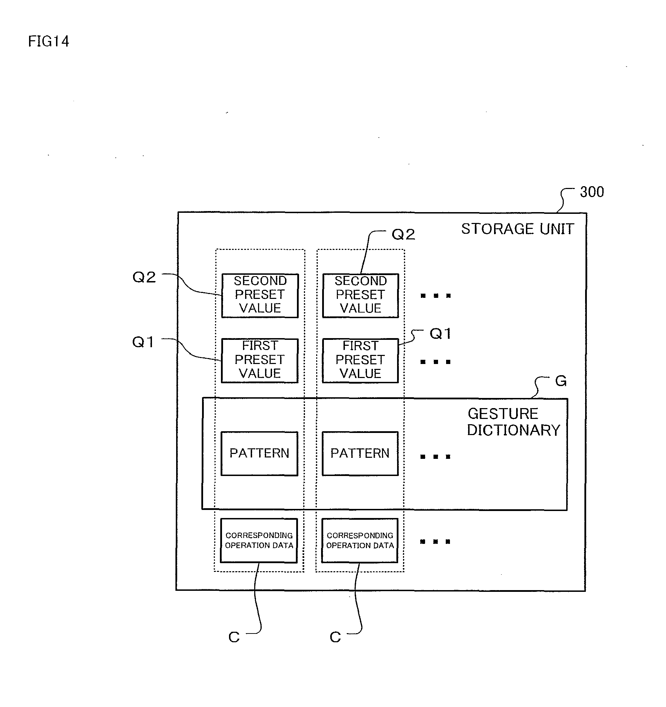

In this embodiment, as illustrated in Fig. 14, a gesture dictionary G, a corresponding operation data C, a first preset value Q1 (hereafter, also simply referred to as "Q1") and a second preset value Q2 (hereafter, also simply referred to as "Q2") which is a value smaller than Q1 are stored in the storage unit 300.

Q1 and Q2 are data of predetermined values of gesture characteristic quantity and are data used as a trigger for the transmission of a control signal to the car-mounted electronic device 20. Q1 and Q2 are correlated for each of a plurality of patterns included in the gesture dictionary G. That is, a plurality of Q1 and Q2 exist.

Here, the gesture characteristic quantity selected as a target for comparison of Q1 and Q2 is the length S of a track in a track in which, for example, a plurality of input coordinate values are connected in time series by straight lines. Q1 is set to a value which is greater than a value of the gesture characteristic quantity assumed to be calculated when the user touches the operation screen of the input device 100 accidentally and momentarily. Q2, which is a value smaller than Q1, is set to a value such that the user may easily perform the input device 100 sensuously in view of the characteristics of the gesture operation and the operation performed by the car-mounted electronic device 20 in accordance with the gesture operation. The gesture characteristic quantity selected as a target for comparison of Q1 and Q2 is not limited to the length S of the track. The gesture characteristic quantity is suitably selected in accordance with the purpose of the gesture operation.

An operation program for performing a misoperation preventing process is stored in the program area of the storage unit 300.

### (Operation)

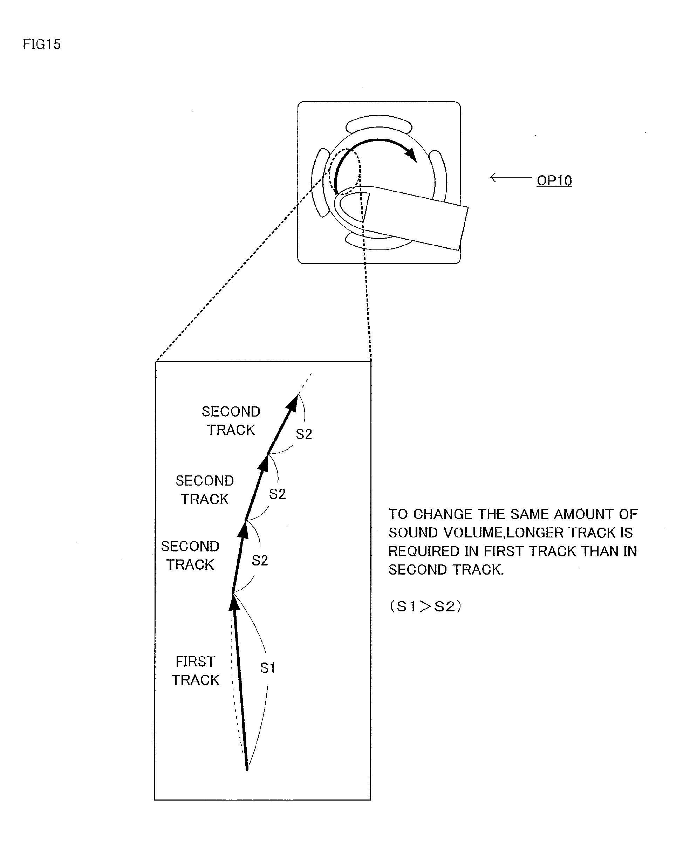

In the misoperation preventing process, in order to implement an operation intended by the user, it is required that the gesture characteristic quantity in accordance with a performed gesture operation reaches Q1 or Q2. Here, as an example, let the gesture characteristic quantity to be selected as a target for comparison of Q1 or Q2 be the length S of the track described above. As illustrated in Fig. 15, by a single continuous gesture operation, let a track made in a period after the user placed, for example, a finger on the operation screen until the gesture characteristic quantity reaches Q1 be referred to as a first track and let a track made in a period after the gesture characteristic quantity reached Q1 until the gesture characteristic quantity reaches Q2 be referred to as a second track. Since Q1 is greater than Q2, as illustrated in Fig. 15, the length S1 of the first track is longer than the length S2 of the second track. Then, in the example of the gesture operation OP 10, regarding the length S of the trace necessary for causing the same volume to be changed, the length S of the first track must be longer than that of the second track.

In this manner, by setting the amount of the gesture characteristic quantity required until the user performs the OP 10 and the volume control signal is transmitted to the car-mounted electronic device 20 to be greater only at the initial stage (in other words, after the gesture characteristic quantity reaches Q1, it is required that the gesture characteristic quantity should reach Q2 which is a condition easier than Q1), if the user touches the operation screen of the input device 100 accidentally during, driving of the car 1, it is possible that the control unit 200 recognizes the gesture operation OP 10 and prevents an unintended increase in the audio volume. Hereinafter, the procedure thereof will be described.

### [Misoperation Preventing Process]

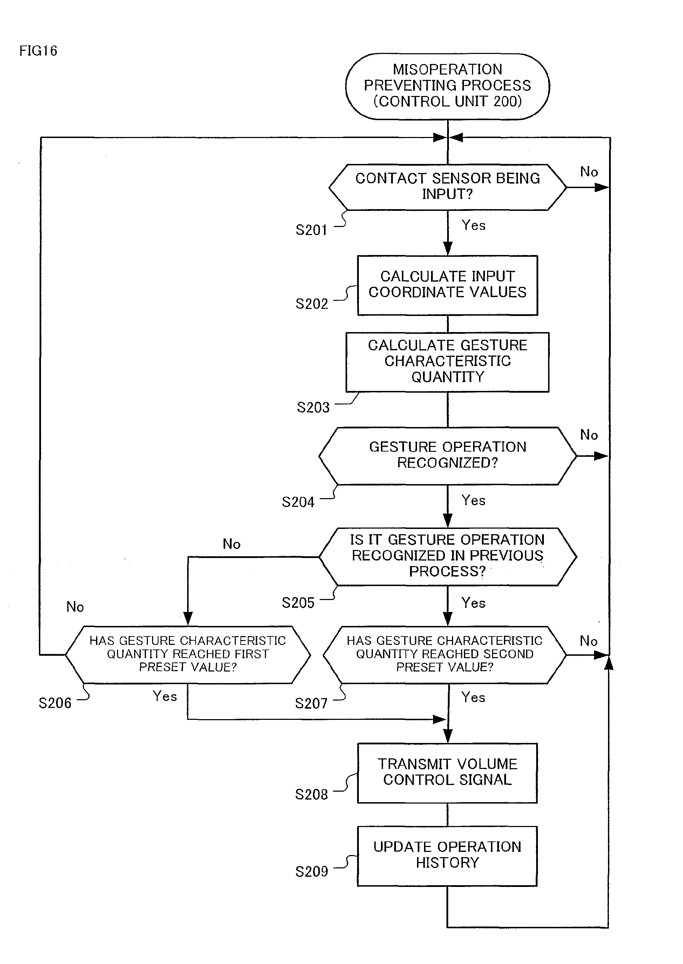

The misoperation preventing process according to the present embodiment will be described with reference to a flowchart of Fig. 16. Steps S201 to S204 of this misoperation preventing process are the same as step S101 to S104 of the car-mounted electronic device control operation of the first embodiment. Therefore, hereinafter, the difference from the car-mounted electronic device control operation will be mainly described.

In step S205, the control unit 200 determines whether the gesture operation recognized in step S204 is the gesture operation recognized in the previous process and the control signal has been made to be transmitted therefor.

Here, the "previous process" is a process performed before the current process in the process illustrated in the flowchart of Fig. 15 which is repeated while the finger, for example, continuously tracing the operation screen and is not a process performed in accordance with the previous gesture operation in a case in which the finger, for example, is separated from the operation screen and the gesture operation is terminated once and the gesture operation is performed again.

Determination in step S205 is updated in later-described step S209, and is determined on the basis of operation history stored in the storage unit 300.

If the gesture operation recognized in the current process is not the gesture operation recognized in the previous process and the control signal has been made to be transmitted therefor (step S205; No), the process proceeds to step S206. On the other hand, if it is the gesture operation recognized in the previous process and the control signal has been made to be transmitted therefor (step S205; Yes), the process proceeds to step S207.

In step S206, the control unit 200 determines whether the calculated gesture characteristic quantity has reached the first preset value Q1 which is correlated with the pattern related to the gesture operation recognized in step S204. In this case, the operation related to the current determination target is the gesture operation which has been immediately performed and which is, in Fig. 15, the gesture operation making the first track.

In step S207, the control unit 200 determines whether the calculated gesture characteristic quantity has reached the second preset value Q2 which is correlated with the pattern related to the gesture operation recognized in step S204. In this case, the operation related to the current determination target is the gesture operation which is continued even after the gesture characteristic quantity reaches Q1 and which is, in Fig. 15, the gesture operation making the second track.

Here, the gesture characteristic quantity to be compared with Q1 and Q2 is suitably defined in accordance with the characteristics of the gesture operations to be recognized for each of a plurality of patterns included in the gesture dictionary G. For example, if the recognized gesture operation is an operation of tracing the operation screen in an arcuate shape along the projecting portions 111b, the gesture characteristic quantity to be compared with Q1 and Q2 correlated with the pattern of the gesture operation is the length S of the track in a track in which a plurality of input coordinate values are connected in time series by straight lines. Therefore, in Q1 and Q2 correlated with the same pattern, the gesture characteristic quantity used as the target for comparison of Q1 and the gesture characteristic quantity used as the target for comparison of Q2 are the same kind of gesture characteristic quantity.

If it is determined that the gesture characteristic quantity has reached Q1 in step S206 (step S206; Yes) or if it is determined that the gesture characteristic quantity has reached Q2 in step S207 (step S207; Yes), the process proceeds to step S208.

In step S208, the control unit 200 reads the corresponding operation data C from the storage unit 300 and transmits a control signal corresponding to the recognized gesture operation to the car-mounted electronic device 20. The process then proceeds to step S209.

In step S209, the control unit 200 overwrites the previous information with the information related to the gesture operation for which the control signal has been made to be transmitted this time and stores in the storage unit 300. This information may be the pattern included in the gesture dictionary G or may be the corresponding operation data C related to the control signal transmitted this time. What is necessary is just to determine, at a subsequent time, whether it is the gesture operation for which the control signal has been made to be transmitted this time in the process in step S205 described above, and a method therefor is arbitrarily selected. In this step S209, the operation history related to the gesture operation for which the control signal has been made to be transmitted will be updated. When the operation history is updated, the process returns to step S201.

The foregoing misoperation preventing process is especially effective in the operation of tracing the operation screen continuously as in the gesture operation OP 10 which is exemplified in the first embodiment. Q1 and Q2 may be suitably set in consideration of the characteristics of the gesture operation and the characteristics of the operation to be performed by the car-mounted electronic device 20 in accordance with the gesture operation.

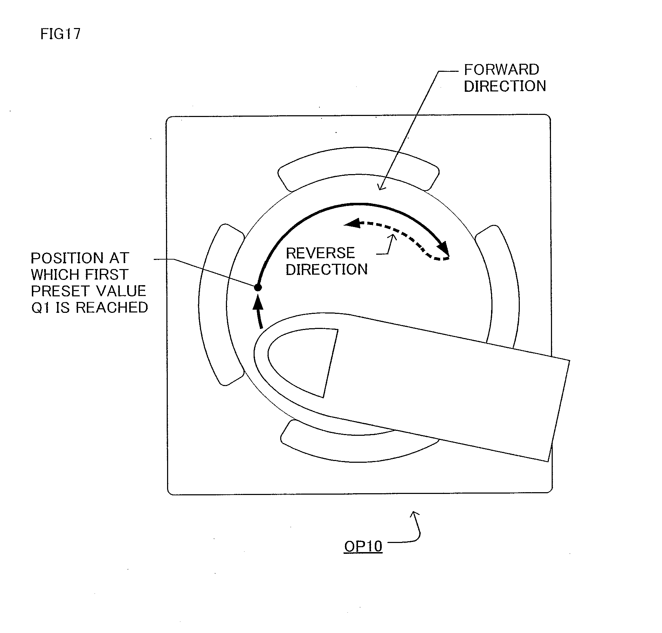

In the example of the gesture operation OP 10, what is necessary is just to determine the pattern included in the gesture dictionary G so that the control unit 200 can recognize the gesture operation if the gesture operation is performed toward the reverse direction from the forward direction (in this case, clockwise) as illustrated in Fig. 17 unless the user separates, for example, the finger from the operation screen as well as if the gesture operation is performed only in the forward direction. In this case, although the sound volume is not changed until the gesture characteristic quantity reaches Q1 accompanying the gesture operation OP 10, thereafter, even if, for example, the finger is moved toward the reverse direction from the forward direction (for example, a movement in a case in which the sound volume is increased excessively in a series of operation and an immediate decrease of the sound volume is desired), each time the gesture characteristic quantity reaches Q2, the sound volume will be changed smoothly. In a case in which the user repeatedly moves, for example, the finger in the forward direction and the reverse direction, the sound volume will be changed in the same manner unless the user separates, for example, the finger from the operation screen.

It is also possible to set two or more preset values of the gesture characteristic quantity in response to the gesture operation and in accordance with the characteristics of the operation performed by the car-mounted electronic device 20.

The control device 1000 according to the present embodiment performs the misoperation preventing process which includes the car-mounted electronic device control operation. With this, if, for example, the user accidentally touches the operation screen of the input device 100, no control signal is transmitted to the car-mounted electronic device 20 and, therefore, the car-mounted electronic device 20 does not perform unintended operation. That is, with the control device 1000 according to the present embodiment, it is possible to reduce performing unintended control of the user to the car-mounted electronic device 20.

### 3. Third Embodiment

A control device 1000 according to the present embodiment performs an operation prohibition process in addition to the misoperation preventing process according to the second embodiment. The operation prohibition process is a process to prohibit control performed by the control device 1000 to the car-mounted electronic device 20 while the user is driving the car 1, especially at a sharp curve or in high speed movement which require attention. Since fundamental structure and operation of a system including the control device 1000 are the same as those of the second embodiment, difference will be described mainly for ease of understanding.

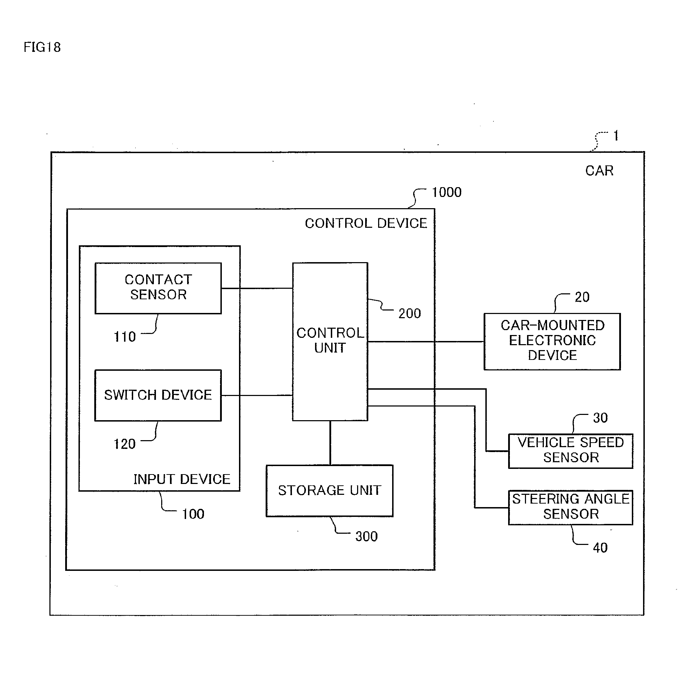

A car 1 according to the present embodiment further includes a vehicle speed sensor 30 and a steering angle sensor 40 as illustrated in Fig. 18.

The vehicle speed sensor 30 is electrically connected to the control device 1000 and transmits a vehicle speed signal representing a vehicle speed value (i.e., travelling speed) of the car 1 to the control device 1000.

The steering angle sensor 40 is electrically connected to the control device 1000 and transmits a steering speed signal representing a steering angle value (i.e., a value of steering amount) of the car 1 to the control device 1000.

Data (not illustrated) of a predetermined threshold of the vehicle speed value and the steering angle value are stored in the data area of the storage unit 300. An operation program for performing the operation prohibition process is stored in the program area of the storage unit 300.

### [Operation Prohibition Process]

The control device 1000 which received the vehicle speed signal or the steering angle signal determines whether a vehicle speed value or a steering angle value calculated on the basis of the vehicle speed signal or the steering angle signal exceeds a predetermined threshold and, if exceeded, stops a misoperation recognition process. Then, the control unit 200 recognizes the gesture operation and it becomes impossible to transmit a predetermined control signal corresponding to the gesture operation to the car-mounted electronic device 20. With this, even if, for example, the finger touches the operation screen of the input device 100 accidentally at, for example, a sharp curve, the car-mounted electronic device 20 does not misoperate and the user can concentrate on driving. Therefore, a safe driving environment can be provided.

Note that, in the operation prohibition process, what is necessary is just to prohibit the control of the control device 1000 performing to the car-mounted electronic device 20 for the user's safety when the user needs to concentrate on driving, the values representing the travelling state of the car 1 for prohibiting the control are not limited to the vehicle speed value and the steering angle value. For example, the car 1 may include an angle sensor and may prohibit control on, for example, a steep slope or may prohibit control when an operation speed of a wiper provided in the car 1 becomes the maximum (which indicates strong rain).

### 4. Modification

The present invention is not limited to the foregoing embodiments and various modification may be made. Examples of such modification will be described below.

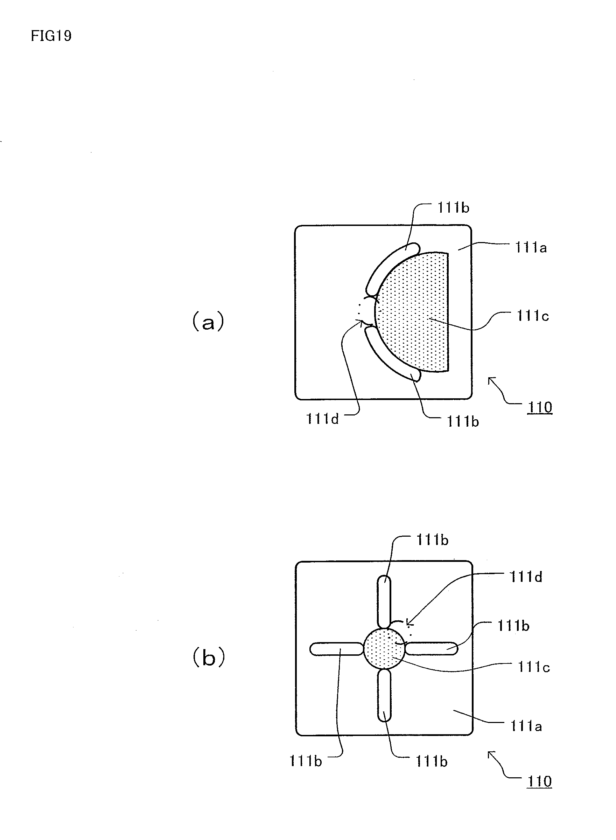

The shape of the stepped portions included in the operation screen of the input device 100 is not limited to the shape according to the foregoing embodiments. As illustrated in Figs. 19(a) and 19(b) (in Fig. 19(b), one of the four gap portions 111d is surrounded by a dash-dot-dot line), stepped portions of various shapes may be possible. If a gesture dictionary G which can recognize gesture operation on the basis of such projecting portions 111b is stored in the storage unit 300, the car-mounted electronic device control operation and the misoperation preventing process can be performed similarly. In broad sense, an arrangement of the projecting portions 111b as those on the operation screen illustrated in Fig. 19(b) in which the circumferential direction of the circular recessed portion 111c and the longitudinal directions of the projecting portions 111b are disposed at right angles and the projecting portions 111b are disposed along the circumferential direction of the recessed portion 111c may also be called an "arcuate arrangement."

In the foregoing examples, the input device 100 does not include the control unit 200 and the storage unit 300, this is not restrictive. The input device 100 may include the control unit 200. The input device 100 may include the control unit 200 and the storage unit 300.

Further, it is also possible that the control unit 200 and the storage unit 300 is not included not only in the input device 100 but in the control device 1000, and the control unit 200 and the storage unit 300 are shared and integrated with a circuit of a control system of the car-mounted electronic device 20 or an Electronic Control Unit (ECU) of the car 1 and, thereby, the car-mounted electronic device control operation or the misoperation preventing process may be performed.

Although the sensor sheet 112 employs the projected capacitive system in the foregoing embodiments, this is not restrictive. The sensor sheet 112 may employ other system than the projected capacitive system, and may be a surface capacitive system or a resistance film system. Also in this case, what is necessary is just to form the sensor sheet 112 integrally with the surface cover 111 (i.e., the operation screen).

Although only one input device 100 is provided in the steering 10 in the foregoing embodiments, this is not restrictive. A plurality of input devices 100 may be provided in the steering 10. For example, one more input device 100 may be disposed at a position at which the user can operate with the thumb of the left hand while grasping the main body portion 11 of the steering 10. Therefore, two input devices 100 may be provided in the steering 10 Further, on the back side of the thus-provided two input devices 100 (i.e., the back surface side of the main body portion 11), two more input devices 100 may be disposed so as to be operated by the index fingers of both hands. Therefore, four input devices 100 may be provided in the steering 10.

Although the input device 100 is disposed at the main body portion 11 of the steering 10 in the foregoing embodiments, this is not restrictive. The input device 100 may be disposed at any position as long as the user can easily operate the input device 100 while driving the car 1. For example, the input device 100 may be disposed at the steering wheel 12, or may be disposed in the vicinity of an unillustrated shift lever or an unillustrated power window switch.

Although an exemplary vehicle in which the input device 100 is provided is a car in the foregoing embodiments, this is not restrictive. The input device 100 may also be provided in, for example, ships and airplanes.

in the first embodiment, although an example in which a plurality of preset values Q exist is illustrated, this is not restrictive. In a case in which the gesture operation intended to be recognized is one, of course the number of the preset value Q is one. Even if there are a plurality of gesture operations intended to be recognized, it is not necessary to correlate the preset value Q with all of the patterns related to the gesture operations.

In the second embodiment, although an example in which a plurality of Q1 and Q2 exist is illustrated, this is not restrictive. In a case in which the gesture operation intended to be recognized is one, of course the number of Q1 and Q2 is one. Even if there are a plurality of gesture operations intended to be recognized, it is not necessary to correlate Q1 and Q2 with all of the patterns related to the gesture operations. What is necessary is just to suitably correlate Q1 and Q2 with patterns related to the gesture operations which easily cause misoperation.

Although the program executed to implement the present invention has been described to be previously stored in the storage unit 300, such an operation program and various types of data may be distributed and provided via a recording medium which is attachable to and detachable from a computer included in the control device 1000. Further, the operation program and various types of data may be distributed by downloading from other apparatus connected via, for example, a telecommunications network.

In addition, each process may be performed by attaching an attachable/detachable recording medium, may be performed by once storing an operation program and various types of data downloaded via, for example, a telecommunications network in a built-in storage device, or may be performed directly using a hardware resource on the side of other apparatus connected via, for example, a telecommunications network. Further, each process may be performed by exchanging various types of data between other apparatus via, for example, a telecommunications network.

The embodiments and the drawings may be changed (including deletion of components) suitably without changing the scope of the present invention.

### INDUSTRIAL APPLICABILITY

Although an exemplary vehicle in which the input device 100 is provided is described as a car, such as an automobile, in the foregoing embodiments, this is not restrictive. The input device 100 may also be provided in, for example, ships or agricultural machines.

**DESCRIPTION OF REFERENCE NUMERALS**

| | |
|---|---|
| 1 | car |
| 10 | steering |
| 11 | main body portion |
| 12 | steering wheel |
| 1000 | control device |
| 100 | input device |
| 110 | contact sensor |
| 111 | surface cover |
| 111a | flat portion, 111b projecting portion, 111c recessed portion, |
| 111d | gap portion |
| 112 | sensor sheet |
| 112a | first sensor array |
| 112b | second sensor array |
| 1120 | sensor |
| 113 | spacer |
| 114 | lower case |
| 115 | upper case |
| 120 | switch device |
| 200 | control unit |
| 300 | storage unit |
| G | gesture dictionary, C corresponding operation data, Q predetermined setting value |
| Q1 | first preset value, Q2 second preset value |
| 20 | car-mounted electronic device |
| 21 | display unit |
| 21a | initial screen, 21b volume control screen, 21c audio control screen |
| 21d | sound source selection screen, 21e music search screen |
| OP 10 | gesture operation along projecting portions |
| OP 20 | gesture operation crossing projecting portion from outside to inside |
| OP 30 | gesture operation passing through gap portion |
| OP 40 | gesture operation crossing projecting portion from inside to outside |
| OP 50 | gesture operation at recessed portion |
| 30 | vehicle speed sensor |
| 40 | steering angle sensor |

## Claims

1. An input device which receives an input operation, comprising:
an operation screen which a member to be detected performing the input operation touches; and
a sensor portion for detecting a position at which the member to be detected has touched the operation screen,
wherein the operation screen includes a projecting portion.

2. The input device according to claim 1, wherein:
the operation screen and the sensor portion are included in a single sheet-shaped member;
the projecting portion is formed by a bent portion of the sheet-shaped member;
the sheet-shaped member includes a first sheet-shaped member and a second sheet-shaped member;
the operation screen is a front surface of the first sheet-shaped member;
the sensor portion is the second sheet-shaped member; and
a front surface of the second sheet-shaped member is in contact with a back surface of the first sheet-shaped member, and the first sheet-shaped member and the second sheet-shaped member are integrated with each other.

3. The input device according to claim 1 or 2, wherein the operation screen includes a recessed portion in the vicinity of the projecting portion.

4. The input device according to any one of claims 1 to 3, wherein the projecting portion is formed in a substantially arcuate shape on the operation screen when seen in the front view.

5. The input device according to claim 3 or 4, wherein the recessed portion is disposed further toward the center of the operation screen than the projecting portion.

6. The input device according to any one of claims 1 to 5, wherein a plurality of projecting portions are provided and arranged at predetermined intervals on the operation screen.

7. The input device according to any one of claims 1 to 6, wherein the sensor portion includes a plurality of sensing electrodes and the plurality of sensing electrodes are provided corresponding to the shape of the operation screen.

8. The input device according to any one of claims 1 to 7, wherein the operation screen is formed by a single sheet member.

9. The input device according to any one of claims 1 to 8, further comprising a control means, wherein the control means controls a predetermined electronic device in accordance with a position of the member to be detected which is detected by the sensor portion.

10. The input device according to any one of claims 1 to 9, wherein the input device is provided in a steering of a vehicle.
